(19) Europäisches Patentamt
European Patent Office
Office européen des brevets

(11) Publication number: **0 146 089 B1**

(12) **EUROPEAN PATENT SPECIFICATION**

(45) Date of publication of patent specification: **05.08.92**

(51) Int. Cl.5: **H01G 4/18**, C07C 69/54

(21) Application number: **84114924.8**

(22) Date of filing: **07.12.84**

The file contains technical information submitted after the application was filed and not included in this specification

(54) **Capacitor with dielectric comprising polyfunctional acrylate polymer and method of making.**

(30) Priority: **19.12.83 US 562873**
**19.12.83 US 562871**
**19.12.83 US 562893**
**19.12.83 US 562894**
**19.12.83 US 562872**

(43) Date of publication of application:
**26.06.85 Bulletin 85/26**

(45) Publication of the grant of the patent:
**05.08.92 Bulletin 92/32**

(84) Designated Contracting States:
**DE FR GB IT NL SE**

(56) References cited:
**FR-A- 2 377 079**
**GB-A- 629 998**
**GB-A- 872 539**
**US-A- 4 243 818**

**CHEMICAL ABSTRACTS, vol. 97, no. 10, September 6, 1982, page 59, ref.no. 73576e; Columbus, Ohio, US & JP-A-82 22 021**

(73) Proprietor: **SPECTRUM CONTROL, INC. (a Pennsylvania corporation)**
**2185 West Eighth Street**
**Erie, PA 16505(US)**

(72) Inventor: **Cichanowski, Stanley William**
**113 Rutter Road**
**Bennington Vermont 05201(US)**
Inventor: **Olson, Daniel Robert**
**27 Denison Road**
**Schenectady New York 12309(US)**
Inventor: **O'Donnell, Timothy William**
**353 Manning Boulevard**
**Albany, New York 12201(US)**

(74) Representative: **Enskat, Michael Antony Frank et al**
**Saunders & Dolleymore 9, Rickmansworth Road**
**Watford Hertfordshire WD1 7HE(GB)**

**EP 0 146 089 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to electrical capacitors. More particularly, it relates to novel capacitors having polyfunctional acrylate polymer dielectrics, and a method for making them.

The development of electronic devices and circuits of reduced size has led to a need for significantly smaller capacitors having increased capacity per unit volume and high temperature capabilities. In particular, such capacitors should be characterized by a low dissipation factor over a wide temperature range in order to conserve energy in the capacitor under operation conditions. Since, however, no single capacitor capable of satisfying the variety of service conditions and requirements was known or available, a number of different ones were developed over the years along three main product lines, i.e., the ceramic type, the metallized film type and the electrolytic type. The utility of many of these, however, is limited to somewhat less than the total electronic range up to about 100 microfarads. Moreover, each has other important shortcomings. For example, solid tantalum capacitors of the electrolytic type and ceramic multilayer capacitors typically have a relatively high dissipation factor and also an undesirable failure mode. On the other hand, the metallized film capacitors have very limited volumetric efficiency and totally lack surface mounting capability. In short, all presently available capacitors are deficient in various respects such as size, long term electronic stability and capability to operate satisfactorily at temperatures in the range of 230-280 ° C.

The evolution of the art has accordingly entailed compromises resulting in general recognition of the need for a better answer to the problem. In this well-developed art, that need is one of relatively long standing.

In the copending, simultaneously filed,commonly assigned application, our reference 10398-36CA-03594/36CA-03570, there is disclosed a novel capacitorstructure having particularly advantageous properties which make them adaptable to a wide variety of service conditions and requirements Said structure comprises successive conductive layers which are offset so as to define a central capacitance region of stacked isolated extending layers, a coating of dielectric deposited on each of said layers so that the layers in the capacitance region are substantially spaced and separated by said coating of dielectric, said coating deposition being controlled so as to slope toward cutoff lines spaced substantially from two separated portions of the central capacitor region, said layer deposition extending beyond said cutoff lines so that successive layers fuse into spaced apart terminal portions, and said cutoff line spacing being sufficient to cause the uppermost dielectric coating of said capacitor to have a horizontal dimension from the capacitor region to the terminal portion to accept a final layer deposition. The disclosure of said application is incorporated by reference herein.

A principal object of the present invention, therefore, is to provide novel capacitors having improved resin dielectrics, and a method for making them as is defined in claims 1-35.

A further object is to provide such capacitors which are capable of use over a wide range of conditions and in a wide variety of applications.

A further object is to provide capacitors in which the dielectric has a low dissipation factor and a relatively low degree of capacitance change over a wide temperature range and a wide variety of operating conditions.

Still another object is to provide polymeric dielectric materials useful in thin film capacitors.

Still another object is to provide ester monomers which are easy to deposit as thin film, said films being subsequently polymerizable by irradiation or the like to form layers useful is dielectrics in thin film capacitors.

Other objects will in part be obvious and will in part appear hereinafter.

In accordance with the foregoing, the present invention includes capacitors comprising two electrodes arated by a dielectric member, said dielectric member comprising a polymer of at least one polyfunctional acrylate having the formula

(I) 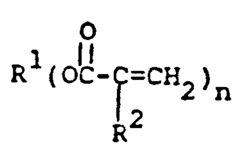 ,

wherein:

$R^1$ is a hydrocarbon or substituted hydrocarbon radical containing at least 4 carbon atoms;

$R^2$ is hydrogen or an alkyl radical containing 1-5 carbon atoms; and

n is from 2 to 6.

The electrodes in the capacitors of this invention may be formed of materials and in configurations known in the art. Typical conductive materials useful as electrodes are aluminum, copper, zinc, tin, stainless steel and alloys thereof, with aluminum being preferred.

The dielectric members are, as previously noted, polymers of polyfunctional acrylates having formula I. In that formula, the $R^1$ value is a hydrocarbon or substituted hydrocarbon radical containing at least 4 carbon atoms. The types of substituents which are permisable will be apparent to those skilled in the art and generally include substituents having only minor effects on the electrical properties of the molecule. Illustrative substituents of this type are hydroxy, alkoxy, carbalkoxy and nitrile substituents. Most often, however, the $R^1$ value is an unsubstituted hydrocarbon radical.

The $R^1$ value contains at least 4 carbon atoms. There is no real upper limit to the number of carbon atoms therein; it is within the scope of the invention to use compounds of formula I in which $R^1$ is a polymeric radical containing, for example, as many as 500 and preferably up to about 300 carbon atoms.

The $R^1$ radical may contain aliphatic, alicyclic or aromatic moieties or a mixture thereof. Preferably, however, all moieties present therein are aliphatic, alicyclic or both.

The $R^2$ value, as previously noted, may be hydrogen or an alkyl radical containing 1-5 carbon atoms. Most often, $R^2$ is hydrogen or methyl and especially hydrogen. Thus, the term "acrylate" as used herein embraces both acrylates and $\alpha$-substituted acrylates including methacrylates and the like, although the acrylates (i.e. the compounds in which $R^2$ is hydrogen) are usually preferred. The value of n may be from 2 to 6, and is most often 2 or 3.

From the foregoing, it will be apparent that the compounds of formula I may typically be prepared by esterification of acrylic acid, methacrylic acid or the like, or functional derivatives thereof such as the acid chlorides, anhydrides and lower alkyl esters, with a wide variety of compounds containing the $R^1$ value. Illustrative compounds of this type are polyhydroxy compounds and polyepoxides. Particularly useful polyfunctional acrylates of formula I are the following:

Acrylates of aliphatic polyhydroxy compounds containing about 4-20 carbon atoms, illustrated by neopentyl glycol, trimethylolpropane, 1,6-hexanediol and $\alpha,\omega$-diol mixtures having an average chain length of 12-20 carbon atoms.

Acrylates of polymers having groups capable of reacting with acrylic acid or derivatives thereof. Illustrative are various hydroxy-terminated diene polymers such as polybutadiene, typically having a number average molecular weight within the range of about 1000-5000.

Acrylates of aromatic diepoxides and polyepoxides, illustrated by diepoxy derivatives of 2,2-bis(4-hydroxyphenyl)propane or "bisphenol A".

A number of commercially available polyfunctional acrylates are useful for the preparation of dielectrics in the capacitors of this invention. Among them are the following, many of which are identified by trademarks as indicated:

Trimethylolpropane triacrylate. Neopentyl glycol diacrylate.

Bisphenol A diacrylate.

Celanese "Celrad 3700", a diacrylate of a diepoxide derived from bisphenol A.

"Sartomer SR-349", a diacrylate of ethoxylated bisphenol A.

Sartomer "Chemlink 2000", a diacrylate of an $\alpha,\omega$-alkanediol containing an average of 14-15 carbon atoms.

A diacrylate of Arco "Poly bd", which is a hydroxy-terminated butadiene resin having a number average molecular weight of about 3000.

While it is within the scope of the invention to use a single polyfunctional compound in forming the dielectric, it is often preferred to employ copolymers prepared from blends of two or more such compounds. This may result in lower dissipation factor than is the case for most polyfunctional acrylates used alone. It may also optimize the physical properties of the material, e.g., lower the viscosity of the monomer composition to facilitate its deposition.

It is also within the scope of the invention to use copolymers prepared from mixtures of at least one compound of formula I with at least one monoacrylate of the formula

(II) 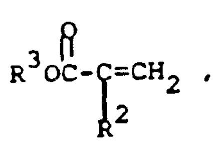

wherein $R^2$ is as previously defined and $R^3$ is a hydrocarbon or substituted hydrocarbon radical, typically containing about 4-25 carbon atoms. Illustrative monoacrylates of formula II are cyclohexyl methacrylate and various acrylated derivatives of fatty acids containing such substituents as carbomethoxy or nitrile. Typical copolymers of compounds of formulas I and II contain about 10-50% by weight, most often about 15-35%, of compounds of formula II with the balance being compounds of formula I.

With respect to these commercially available acrylates and the like, it is frequently preferred to remove residual acrylic acid and other ionic compounds and impurities which may be present in the materials as received from the supplier. Such impurities are readily removed by known methods such as the use of absorption columns or ion exchange resins.

Illustrative polyfunctional acrylate compositions whose polymers are suitable as dielectrics in the capacitors of this invention are illustrated in Tables I and II. All percentages in these tables are by volume.

TABLE I

| Ingredient | Example 1 | 2 | 3 |
|---|---|---|---|
| "Poly bd" diacrylate | 100 | 50 | --- |
| "Chemlink 2000" | --- | 50 | 100 |

TABLE II

| Ingredient | Example 4 | 5 | 6 | 7 | 8 | 9 | 10 | 11 |
|---|---|---|---|---|---|---|---|---|
| Trimethylol-propane triacrylate | 50 | 100 | -- | -- | -- | -- | -- | 25 |
| Neopentyl glycol diacrylate | -- | -- | 50 | 60 | 40 | 40 | 50 | 25 |
| Bisphenol A diacrylate | -- | -- | -- | -- | -- | 20 | -- | -- |
| "Sartomer SR-349" | -- | -- | 50 | 20 | -- | -- | -- | -- |
| "Celrad 3700" | 50 | -- | -- | 20 | 50 | 40 | 50 | 50 |
| Cyclohexyl methacrylate | -- | -- | -- | -- | 10 | -- | -- | -- |

In a preferred subgenus of the capacitors of this invention, the dielectric member is a polymer of at least one polyfunctional acrylate of formula I in which $R^2$ is hydrogen or methyl, n is from 2 to 4, and $R^1$ is an aliphatic, alicyclic or mixed aliphatic-alicyclic radical having about 10-40 carbon atoms which optionally contains up to about three olefinic linkages, said olefinic linkages being non-conjugated.

The $R^1$ radical in this preferred subgenus may be aliphatic, alicyclic or mixed aliphatic-alicyclic; it may optionally contain up to about three olefinic linkages which are non-conjugated, and contains about 10-40 carbon atoms. Suitable polyhydroxy compounds include straight chain compounds such as hexadecanediol and octadecanediol, with the hydroxy groups being located anywhere on the chain, and branched chain isomers thereof. By "branched chain" is meant that at least one carbon atom is present in a branch. Thus, configurations such as

$HO(CH_2)_{15}OH$ and

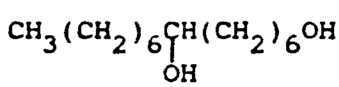

are unbranched, while

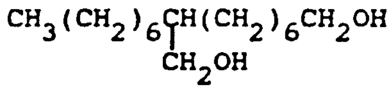 and

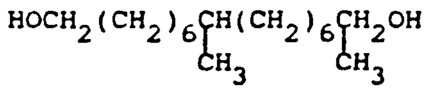

are branched.

A first preferred class of polyhydroxy compounds within this subgenus consists of those characterized by being branched and also by having at least 18 carbon atoms in a single chain; that is, at least 18 carbon atoms are successively bonded without branching. Particularly suitable polyfunctional acrylates derived therefrom are those having the formulas

(III) 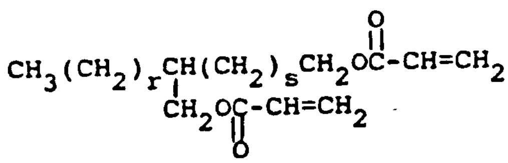 and

(IV) 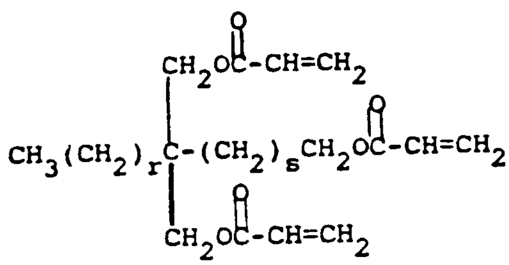

wherein r and s are each 7 or 8 and the sum of r and s is 15. They may be obtained, for example, by acrylic acid esterification of the hydroformylation products of oleic acid, as disclosed in U.S. Patent 4,243,818. Another suitable compound is 1,12-octadecanediol diacrylate, formed by hydrogenolysis of ricinoleic acid followed by esterification.

Also within this first preferred class of polyhydroxy compounds are novel single compounds and mixtures, especially mixtures, in which $R^1$ is at least one aliphatic or alicyclic radical containing about 20-40 carbon atoms and optionally up to about three non-conjugated olefinic linkages. At least about 40%, and preferably at least about 50%, of the total number of $R^1$ radicals therein are alicyclic. Thus, the polyhydroxy compounds may be entirely alicyclic or may be mixtures of acyclic and alicyclic compounds satisfying these percentage limitations.

It is frequently convenient to prepare such polyhydroxy compounds by reduction of at least one corresponding polycarboxylic acid or ester thereof, which may be saturated or may contain olefinic linkages. A typical suitable polycarboxylic acid is linoleic acid dimer (hereinafter "dimer acid"), a mixture consisting essentially of acyclic, monocyclic and bicyclic dicarboxylic acids which typically contain up to two olefinic bonds per molecule. A particularly suitable dimer acid is sold by Emery Industries under the trade designation "Empol 1010". According to Kirk-Othmer, Encyclopedia of chemical Technology, Third Edition, Volume 7, pp. 768-770, the following are structures of typical molecular species present in the methyl ester of dimer acid:

(V)

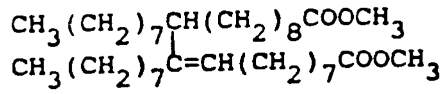

(VI)

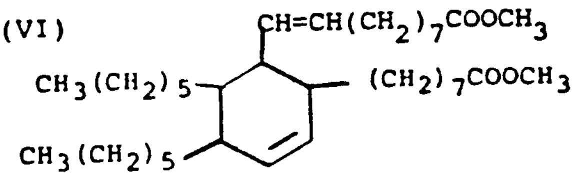

(VII)

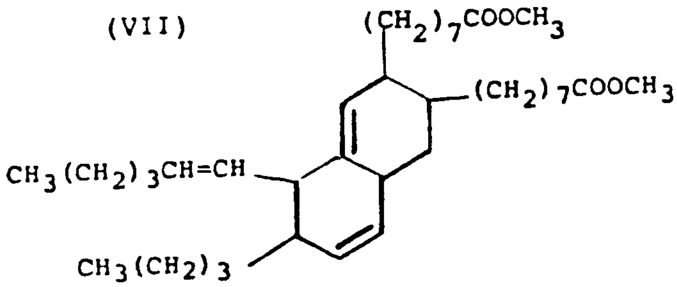

Thus, free dimer acid obviously comprises free dicarboxylic acids having corresponding structures.

The esters of formulas V, VI and VII, their corresponding free acids, and similar polycarboxylic acids and esters may be reduced by known methods, such as by hydrogen in the presence of a hydrogenation catalyst or by lithium aluminum hydride, to produce diols useful for preparation of the polyfunctional acrylates. Depending on the method of reduction of these or similar acids or esters, the reduction product may be saturated or may contain olefinic linkages. For example, lithium aluminum hydride reduction normally will not affect olefinic linkages while some hydrogenation methods (e.g., in the presence of a palladium catalyst) will reduce them to saturated linkages. Thus, reduction of compounds V, VI and VII may produce diols of the respective formulas

(VIII)

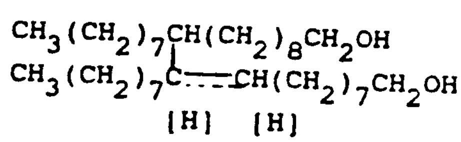

(IX)

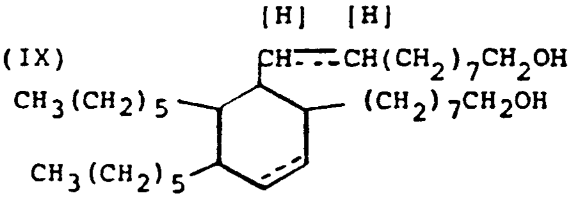

(X)

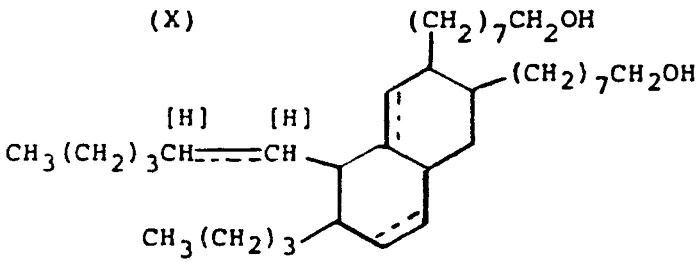

wherein the broken lines and hydrogen atoms in brackets indicate that the corresponding carbon-carbon bonds may be single or double bonds depending on the method of reduction. It is frequently found that the compounds which contain only single bonds have properties somewhat more favorable than those of the analogous double-bonded compounds. Suitable diol mixtures of this type are commercially available from Henkel Corporation under the trade name "Dimerol".

Other suitable polyhydroxy compounds within this first preferred class may be prepared by reduction of various acrylic acid-unsaturated fatty acid condensation products. These polyhydroxy compounds may be illustrated by the formula

(XI) 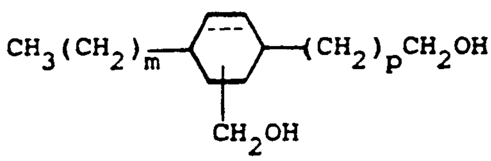

wherein m may be, for example, from 3 to 5, p may be from 7 to 9 and the sum of m and p is 12. A typical commercially available dicarboxylic acid which may be reduced to a diol of formula XI is sold under the trade designation "Westvaco 1550 Diacid"; it has the formula

(XII) 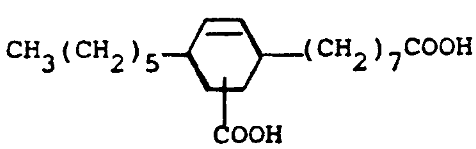

and is an adduct of linoleic and acrylic acids. It is also described in Kirk-Othmer, op. cit., at p. 779.

A second preferred class of polyhydroxy compounds consists of 1,2-alkanediols in which $R^1$ has the formula

(XIII) 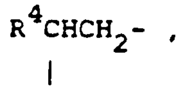

wherein $R^4$ is an alkyl radical containing about 8-28 carbon atoms. Examples of suitable $R^4$ radicals are 1-octyl, 2-methylheptyl, 1-nonyl, 2,3-dimethylheptyl, 1-decyl, 2-dodecyl, 1-tetradecyl, 1-octadecyl, 1-eicosyl and 1-docosyl. Radicals having the formula $R^5CH_2$, wherein $R^5$ is an alkyl and especially a straight chain alkyl radical having about 7-27 and most often about 9-17 carbon atoms, are preferred as $R^4$.

Also within the preferred subgenus of the capacitor of this invention are those in which the dielectric is a polymer of novel mixtures of esters having formulas I and

(XIV) 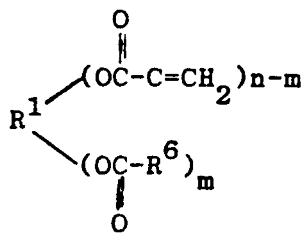

wherein $R^6$ is an aliphatic hydrocarbon radical containing about 1-20 carbon atoms and free from acetylenic and polymerizable ethylenic unsaturation and m is less than n and is from 1 to 3; at least about 50% of the carboxylate moieties in said compositions having the formula

(XV) 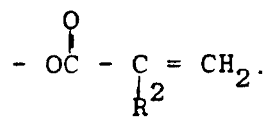

Such polymers have low dissipation factors over a still wider temperature range than those described hereinabove.

As will be apparent from formula XIV, the constituents of these ester mixtures include mixed esters containing both acrylate moieties and carboxylate moieties derived from a carboxylic acid of the formula $R^6COOH$ in which $R^6$ contains about 2-19 carbon atoms and is free from acetylenic and polymerizable ethylenic unsaturation. The $R^6$ groups are preferably alkyl radicals, especially those containing 1-7 and most often 2-4 carbon atoms. Illustrative carboxylic acids of this type are acetic, propionic, butyric, 2-ethylhexanoic, lauric, palmitic, stearic and oleic acids. As described in the aforementioned simultaneously filed application our ref.: 10398-36CA-03594/36CA-03570 the capacitors of this invention are frequently produced by a method which includes vapor deposition of monomers, followed by polymerization to form the dielectric member. Vapor deposition conditions for the above-described ester mixtures are optimized when the carboxylate moieties are substantially similar in their contributions to the volatility of the ester mixture. Therefore, it is most preferred that $R^5$ be of a size and molecular weight similar to that of the corresponding moiety in the acrylate radical, and specifically that $R^5$ be the ethyl radical, that is, that $R^5COOH$ be propionic acid.

Of the total number of carboxylate moieties in these ester mixtures, at least about 50%, usually about 65-99% and preferably about 70-90%, have formula XV. Thus, a major proportion of the carboxylate moieties are polymerizable.

Procedures for esterification of the polyhydroxy compounds will be apparent to one skilled in the art. Thus, the alcohol and acids may typically be reacted in a suitable solvent, typically in the presence of a small amount of an acidic esterification catalyst such as sulfuric acid, p-toluenesulfonic acid, acidic ion exchange resins or acidified clays. Ordinarily, a stoichiometric excess of the acids is used, the ratio of equivalents of acid to diol typically being between about 1.1:1 and about 4:1. Any excess acid may be removed by washing with aqueous alkaline solutions after esterification.

In order to minimize the amount of esters of the formula

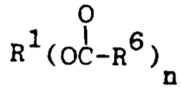

in the previously described ester mixtures, it is preferred to prepare such mixtures by reacting the polyhydroxy compound sequentially with the two acids. This may be done in either order; it is somewhat preferred to react first with the acrylic acid. The mole ratio of acrylic acid to the other acid is at least 1:1, most often about 1.65-1.99:1 and preferably about 1.7-1.9:1. Because there is some degree of uncertainty about the exact proportions of the various esters in such mixtures, it is also appropriate to define said mixtures in terms of the sequential method for their preparation.

The esterification reaction is ordinarily carried out at about 50-200 ° C, most often about 60-150 ° C. It is often preferred to incorporate in the esterification mixture a minor amount of a polymerization inhibitor such as p-methoxyphenol, 2,6-di-t-butylphenol or 2,4,6-tri-t-butylphenol. The acids may be replaced by functional derivatives thereof such as the corresponding acyl halides, lower alkyl esters or amides, with suitable modification of the reaction conditions.

The preparation of polyfunctional acrylates and ester mixtures useful in this invention is illustrated by the following examples. All parts are by weight unless otherwise indicated.

EXAMPLE 12

A mixture of 102 parts by weight (0.34 mole) of a commercially available (from Henkel Corporation) diol having the formula

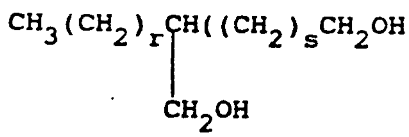

in which the sum of r and s is 15, 2.55 parts of p-methoxyphenol and 2.38 parts of p-toluenesulfonic acid in 153 parts of n-hexane was heated to reflux with stirring and 5.44 parts (0.76 mole) of acrylic acid was added over several hours. Heating was continued as water was removed by azeotropic distillation. When the theoretical amount of water had been removed, the solution was diluted with 206 parts of n-hexane and extracted five times with a 3% (by weight) aqueous potassium hydroxide solution and twice with aqueous sodium chloride solution. Upon evaporation of the hexane, there was obtained 127 parts (92% of theoretical) of the diacrylate which was filtered through glass fibers and stabilized by the addition of 100 ppm of p-methoxyphenol.

EXAMPLE 13

A mixture of 100 grams (0.3 mole) of a commercially available (from Henkel Corporation) triol having the formula

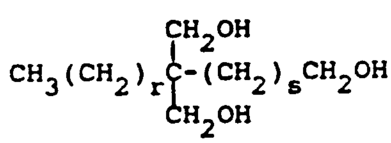

in which the sum of r and s is 15, 0.3 gram of p-methoxyphenol and 2 grams of p-toluenesulfonic acid in 500 ml. of toluene was heated to 120 ° C and 115 ml. (1.64 moles) of acrylic acid was added dropwise. Heating was continued as water was removed by azeotropic distillation. When the theoretical amount of water had been removed, the solution was washed with aqueous potassium carbonate solution and dried. The desired triacrylate was obtained as a liquid upon evaporation of solvent.

EXAMPLE 14

Following a procedure similar to that of Example 13, 1,12-octadecanediol diacrylate was prepared.

EXAMPLE 15

To a solution of 96 grams (2.5 moles) of lithium aluminum hydride in 3000 ml. of tetrahydrofuran was added dropwise, with stirring, 400 grams (0.71 mole) of "Empol 1010" dimer acid. The mixture was heated under reflux for about 40 hours and then neutralized by the sequential addition of 96 ml. of water, 96 ml. of 15 percent aqueous sodium hydroxide solution, and 288 ml. of water. The neutralized mixture was filtered and the solvent was evaporated from the filtrate to yield the desired diol.

A solution of 200 grams (0.37 mole) of the diol, 157 ml. (2.24 moles) of acrylic acid, 3 grams of p-toluenesulfonic acid and 0.5 gram of p-methoxyphenol in 1000 ml. of toluene was heated under reflux as

water was removed by azeotropic distillation. When the stoichiometric amount of water (about 13.3 ml.) had been removed, the solution was cooled, filtered and washed several times with dilute potassium carbonate solution and once with dilute sodium chloride solution. It was then dried over magnesium sulfate and the solvent was evaporated to afford the desired diacrylate as a liquid.

EXAMPLE 16

Following the procedure of Example 15, "Westvaco 1550 Diacid" was reduced by lithium aluminum hydride in tetrahydrofuran to a diol having formula VIII in which m is 5, p is 7 and the broken line indicates a double bond. This diol (85 grams, 0.25 mole) was reacted with acrylic acid (90 ml., 1.28 mole) in toluene solution to yield the desired diacrylate as a liquid.

EXAMPLE 17

Following a procedure similar to that of Example 13, a liquid diacrylate was prepared from a commercially available diol which was in turn prepared by hydrogenation of a methyl ester of linoleic acid dimer, and whose principal components have formulas VIII, IX and X wherein the broken lines represent predominantly single bonds.

EXAMPLE 18

A solution of 51 grams (0.20 mole) of 1,2-hexadecanediol, 100 ml. (1.5 moles) of acrylic acid, 1.5 grams of p-toluenesulfonic acid and 2 grams of p-methoxyphenol in 400 grams of toluene was heated for about 24 hours under reflux as water was removed by azeotropic distillation. The solution was cooled, filtered and washed several times with dilute potassium carbonate solution and once with dilute sodium chloride solution. It was then dried and the solvent was evaporated to afford the desired 1,2-hexadecanediol diacrylate as a liquid.

EXAMPLE 19

A solution of 102.6 parts (0.34 mole) of a diol having the formula

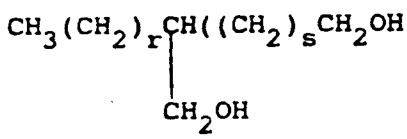

in which the sum of r and s is 15, 36 parts (0.5 mole) of acrylic acid, 2.5 parts of p-methoxyphenol and 2.33 parts of p-toluenesulfonic acid in 200 parts of n-hexane was heated under reflux as water was removed by azeotropic distillation. After several hours of reaction, 20 parts (0.27 mole) of propionic acid was added and refluxing was continued for 24 hours. The solution was cooled, washed several times with aqueous potassium hydroxide solution and dried. The desired mixed acrylate-propionate was obtained as a liquid upon evaporation of solvent.

EXAMPLE 20

A solution of 100 grams (0.303 moles) of a triol having the formula

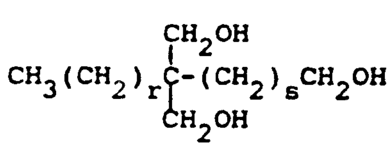

in which the sum of r and s is 15, 2.5 grams of p-methoxyphenol and 2.33 grams of p-toluenesulfonic acid in 300 ml. of n-hexane was heated under reflux with stirring and 50 grams (0.69 mole) of acrylic acid was

added. Heating and stirring were continued for several hours as water was removed by azeotropic distillation. After several hours of reaction, 24 grams (0.32 mole) of propionic acid was added and refluxing was continued for several hours. The solution was cooled, washed several times with aqueous potassium hydroxide solution and dried. The desired mixed acrylate-propionate (127.1 grams, or 85% of theoretical) was obtained as a liquid upon evaporation of solvent.

EXAMPLE 21

A solution of 51 parts (0.20 mole) of 1,2-hexadecanediol, 30 parts (0.15 mole) of lauric acid and 1.5 grams of p-toluenesulfonic acid in 400 parts of toluene is heated for about 24 hours under reflux as water is removed by azeotropic distillation. Acrylic acid, 21.6 parts (0.3 mole), is then added and heating is continued until water evolution ceases. The solution is cooled, filtered and washed several times with dilute potassium chloride solution and once with dilute sodium chloride solution. It is then dried and the solvent is evaporated to afford the desired 1,2-hexadecanediol ester mixture as a liquid.

The polyfunctional acrylates and ester mixtures may be polymerized under free-radical conditions, either alone or in the presence of other monomers. The term "polymer," as used herein, includes addition homopolymers and copolymers with one or more other monomers. Polymers of the novel polyfunctional acrylates and ester mixtures are another aspect of the invention.

Polymerization by the free-radical method may be effected in bulk, solution, suspension or emulsion, by contacting the monomer or monomers with a polymerization initiator either in the absence or presence of a diluent at a temperature of about 0-200°C. Suitable initiators include benzoyl peroxide, tertiary butyl hydroperoxide, acetyl peroxide, hydrogen peroxide, azobisisobutyronitrile, persulfate-bisulfite, persulfate-sodium formaldehyde sulfoxylate, chlorate-sulfite and the like. Alternatively, polymerization may be effected by irradiation techniques, as by ultraviolet, electron beam or plasma irradiation.

A large variety of polymerizable compounds can be used to form copolymers with the polyfunctional acrylates and ester mixtures. They include the following:

1. Unsaturated alcohols and esters thereof: Allyl, methallyl, crotyl, 1-chloroallyl, 2-chloroallyl, cinnamyl, vinyl, methylvinyl, 1-phenallyl and butenyl alcohols, and esters of such alcohols with saturated acids such as acetic, propionic, butyric, valeric, caproic and stearic; with unsaturated acids such as acrylic, $\alpha$-substituted acrylic (including alkylacrylic, e.g., methacrylic, ethylacrylic, propylacrylic, etc., and arylacrylic such as phenylacrylic), crotonic, oleic, linoleic and linolenic; with polybasic acids such as oxalic, malonic, succinic, glutaric, adipic, pimelic, suberic, azelaic and sebacic; with unsaturated polybasic acids such as maleic, fumaric, citraconic, mesaconic, itaconic, methylenemalonic, acetylenedicarboxylic and aconitic; and with aromatic acids, e.g, benzoic, phenylacetic, phthalic, terephthalic and benzoylphthalic acids.

2. Unsaturated acids (examples of which appear above) and esters thereof with lower saturated alcohols, such as methyl, ethyl, propyl, isopropyl, butyl, isobutyl, sec-butyl, tert-butyl, 2-ethylhexyl and cyclohexyl alcohols, and with saturated lower polyhydric alcohols such as ethylene glycol, propylene glycol, tetramethylene glycol, neopentyl glycol and trimethylolpropane.

3. Unsaturated lower polyhydric alcohols, e.g., butenediol, and esters thereof with saturated and unsaturated aliphatic and aromatic, monobasic and polybasic acids, examples of which appear above.

4. Esters of the above-described unsaturated acids, especially acrylic and methacrylic acids, with higher molecular weight monohydroxy and polyhydroxy materials such as decyl alcohol, isodecyl alcohol, oleyl alcohol, stearyl alcohol, epoxy resins and polybutadiene-derived polyols.

5. Vinyl cyclic compounds including sytrene, o-, m-, p-chlorostyrenes, bromostyrenes, fluorostyrenes, methylstyrenes, ethylstyrenes and cyanostyrenes; di-, tri-, and tetrachlorostyrenes, bromostyrenes, fluorostyrenes, methylstyrenes, ethylstyrenes, cyanostyrenes; vinylnaphthalene, vinylcyclohexane, divinylbenzene, trivinylbenzene, allylbenzene, and heterocycles such as vinylfuran, vinylpridine, vinylbenzofuran, N-vinylcarbazole, N-vinylpyrrolidone and N-vinyloxazolidone.

6. Unsaturated ethers such as methyl vinyl ether, ethyl vinyl ether, cyclohexyl vinyl ether, octyl vinyl ether, diallyl ether, ethyl methallyl ether and allyl ethyl ether.

7. Unsaturated ketones, e.g., methyl vinyl ketone and ethyl vinyl ketone.

8. Unsaturated amides, such as acrylamide, methacrylamide, N-methylacrylamide, N-phenylacrylamide, N-allylacrylamide, N-methylolacrylamide, N-allylcaprolactam, diacetone acrylamide, hydroxymetholated diacetone acrylamide and 2-acrylamido-2-methylpropanesulfonic acid.

9. Unsaturated aliphatic hydrocarbons, for instance, ethylene, propylene, butenes, butadiene, isoprene, 2-chlorobutadiene and $\alpha$-olefins in general.

10. Unsaturated alkyl halides, e.g., vinyl fluoride, vinyl chloride, vinyl bromide, vinylidene chloride,

vinylidene bromide, allyl chloride and allyl bromide.

11. Unsaturated acid anhydrides, e.g., maleic, citraconic, itaconic, cis-4-cyclohexene-1,2-dicarboxylic and bicyclo(2.2.1)-5-heptene-2,3-dicarboxylic anhydrides.

12. Unsaturated acid halides such as cinnamyl acrylyl, methacrylyl, crotonyl, oleyl and fumaryl chlorides or bromides.

13. Unsaturated nitriles, e.g., acrylonitrile, methacrylonitrile and other substituted acrylonitriles.

By virtue of their polyfunctionality, the acrylates and ester mixtures disclosed herein form crosslinked polymers. Thus, they are adapted to the production of heat-resistant polymeric films.

The polymers of this invention are useful, for example, in the preparation of corrosion-resistant coatings and as ingredients for printing inks. They are also useful as insulating materials in certain electrical applications; for example, as potting compositions and as encapsulation resins.

The polymers are particularly useful as dielectric compositions in capacitors, because of their adaptability to the production of capacitors with high efficiency and with a low dissipation factor over a very wide temperature range. Referring particularly to the ester mixtures previously described, while the invention is not dependent on any theory of operation, it is believed that the $R^6$ groups therein act as plasticizing agents, causing a lowering of phase transition points of some kind at which there is a change in the conductivity properties of the polymer, and which otherwise may appear at temperatures generally in the vicinity of -20° to -30°.

A preferred subgenus of the polymers of this invention from the standpoint of use as dielectric members for capacitors consists of polymers in which all of the units are derived from the polyfunctional acrylates or ester mixtures of this invention. Also contemplated are copolymers of said polyfunctional acrylates or ester mixtures with other mono- and polyacrylates. Illustrative of suitable monoacrylates are those of higher monohydroxy alcohols such as isodecyl alcohol or of higher monoepoxides, the term "higher" denoting at least 8 carbon atoms. The preferred copolymers, however, are those with polyfunctional acrylates previously disclosed herein, such as those of trimethylolpropane, neopentyl glycol, polybutadiene-derived polyols and polyepoxides. The copolymers are typically prepared from blends comprising about 25-75% by weight of the polyfunctional acrylates or ester mixtures of this invention, with the balance being other acrylates.

Referring now to Figure 1, there is shown in schematic form a capacitor comprising lower electrode 10 which may be aluminum foil, a dielectric coating 11 of a polyfunctional acrylate polymer which may be formed by deposition of one of the above-described acrylate compositions on the surface of electrode 10 by, for example, vacuum evaporation or roller coating and suitable polymerization, and upper electrode 12 which is a thin metallized layer of aluminum deposited on dielectric film 11. Leads 13 nd 14 are respectively attached to lower and upper electrodes 10 and 12.

Another aspect of the present invention is a method of making a capacitor, said method comprising the steps of forming on a substrate a dielectric coating of a polymer of at least one polyfunctional acrylate as previously described and depositing an electrode layer on said dielectric coating. The coating may be produced by applying the polymer, optionally in solution in a substantially inert solvent, by conventional means such as flowing, spraying, dipping, brushing, roller coating, spin coating, drawing down or the like, followed by evaporation of any solvent used. It is usually preferred, however, to apply a polyfunctional acrylate monomer film and subsequently polymerize it by one of the methods previously described. The use of electron beam polymerization is particularly preferred since such a process very rapidly polymerizes the monomer composition without the need for additional curing agents, and thus leads to economical production of very thin coatings.

In one embodiment of the method of this invention, the substrate is itself a conductive material which may serve as an electrode, whereupon the two electrodes and the dielectric coating separating them may constitute the entire capacitor. Figure 4 of the drawing is an illustrative flow diagram of this embodiment which is also illustrated by the following example.

EXAMPLE 22

Uniform prototype capacitors were produced by drawing down layers of the compositions of Examples 1-11 on an aluminum foil substrate, polymerizing said monomer layer by contact with an electron beam, and depositing a metallic aluminum layer thereon. The thickness of the aluminum foil electrode was 12.5 microns, that of the dielectric layer was 3-6 microns and that of the deposited aluminum electrode was 300-500 Angstroms (0.03-0.05 micron). The areas of the prototype capacitors were about 1 square inch. The dissipation factors of said capacitors were measured at 60 Hz. using an AC bridge.

Figures 2 and 3 graphically depict the relationship between temperature and dissipation factor for

typical prototype capacitors prepared as described above in which the polyfunctional acrylate compositions of Examples 1 and 2, respectively, were respectively polymerized by 15- and 10-megarad electron beams to form the dielectric coatings. As is apparent, the dissipation factors remained well below 0.3% from 30° to 130°C.

Table III lists the dissipation factors at various temperatures of other typical capacitors made as described above, using the previously described polyfunctional acrylate compositions.

TABLE III

| Example | Electron beam, megarads | Dissipation factor, % | | | | |
|---|---|---|---|---|---|---|
| | | 30°C | 100°C | 120°C | 125°C | 165°C |
| 3 | 15 | 1.55 | --- | 0.25 | ---- | ---- |
| 4 | 10 | 1.05 | --- | 0.95 | ---- | ---- |
| 5 | 8 | ---- | 0.9 | ---- | ---- | ---- |
| 6 | 10 | 0.65 | --- | 1.35 | ---- | ---- |
| 7 | 10 | 0.65 | --- | 1.40 | ---- | ---- |
| 8 | 10 | 0.80 | --- | 0.85 | ---- | ---- |
| 9 | 10 | 0.80 | --- | 0.85 | ---- | 1.10 |
| 10 | 16 | 0.60 | --- | 0.95 | ---- | ---- |
| 11 | 15 | 0.80 | --- | ---- | 1.10 | ---- |

In another and preferred embodiment of the method of this invention, alternating electrode layers and dielectric coatings are deposited as described in the aforementioned , simultaneously filed application our ref.: 10398-36CA-03594/36CA-03570. The capacitors thus produced have particularly advantageous properties, such as high efficiency,capability of operation at high temperatures, long term electronic stability, favorable failure mode and versatility over a wide range of capacitances. The following examples illustrate some of the advantageous properties of such capacitors.

EXAMPLE 23

The procedure described in the afore mentioned, simultaneously filed application, our ref.: 10398-36CA-03594/36CA-03570, was used to prepare a capacitor about 18mm in width. The substrate was aluminum foil about 50 microns thick. Alternate dielectric (thickness about 1 micron) and electrode (thickness about 200-500 Angstroms) layers were deposited. The dielectric layers were formed by evaporation of the product of Example 12 at 375°C and deposition on an electrode surface maintained at 24°C, followed by electron beam-initiated polymerization, and the electrode layers by vapor deposition of aluminum. The finished capacitor contained 1000 layers each of dielectric and deposited electrode. The dissipation factor thereof, measured at 60 Hz. over a 30-150°C temperature range, varied from a maximum of 3.10% at 30°C to a minimum of 0.300% at 150°C.

EXAMPLE 24

A capacitor was prepared as described in Example 23, except that dielectric was a polymer of the product of Example 17, said product was deposited by evaporation at 400°C and deposition at 48°C, the thickness of the electrode layers was 300-500 Angstroms and the capacitor contained 200 layers each of dielectric and deposited electrode. The dissipation factor thereof, measured at 100 Hz. over a 30-130°C temperature range, varied from a maximum of 2.8% at 30°C to a minimum of 0.7% at 90-130°C.

EXAMPLE 25

A number of capacitors, prepared as in Example 23 except for numbers of layers and dielectric layer thickness in some cases, were cut to various sizes to provide specific capacitance values and tested for extended periods under the AC voltage and temperature conditions listed in Table IV. None of said capacitors had failed at the ends of the test periods listed.

TABLE IV

| Layers | Dielectric thickness, microns | Capacitance, microfarads | Voltage | Temp. °C | Hours |
|---|---|---|---|---|---|
| 1000 | 1.2 | 0.2 | 20 | 130 | 500 |
| 100 | 1.1 | 0.19 | 50 | 85 | 664 |
| 930 | 1.1 | 0.19 | (25 | 85 | 68 |
| | | | (50 | 85 | 609 |
| 500 | 1 | 2 | 20 | 130 | 1123 |
| 500 | 1 | 0.11 | (25 | 85 | 68 |
| | | | (50 | 85 | 776 |
| 500 | 1.1 | 0.1 | (25 | 85 | 68 |
| | | | (50 | 85 | 776 |

These results show the stability of capacitors of this type over prolonged operation periods at relatively high temperature.

EXAMPLE 26

Uniform prototype capacitors were produced as described in Example 22 from the compositions of Examples 12, 13 and 15-17, and the dissipation factors of said capacitors were measured. The results are given in Table V.

Table V

| Example | Dissipation factor, % | | |
|---|---|---|---|
| | 30°C | 90°C | 130°C |
| 12 | 2.7 | 0.40 | 0.15 |
| 13 | 0.85 | 1.10 | 0.95 |
| 15 | 0.75 | 0.05 | 0.025 |
| 16 | 0.95 | 0.70 | 1.95 |
| 17 | 1.7 | 0.10 | 0.12 |

As will be apparent from the table, capacitors of this invention are characterized by versatility of application, typically including extremely low dissipation factors at both high and low temperatures.

EXAMPLE 27

A prototype capacitor produced as described in Example 22 in which the dielectric was a homopolymer of 1,2-hexadecanediol diacrylate (the product of Example 21) had a dissipation factor which varied from 0.8 at 30°C to 0.45 at 110°C and 0.6 at 150°C and a change in capacitance which, using the value at 30°C as a baseline, varied from +1.2% at 80°C to -0.8% at 150°C. These results show that said homopolymer, when used as a capacitor dielectric, is characterized by particularly low capacitance change over a wide range of temperatures.

EXAMPLE 28

Prototype capacitors were produced as described in Example 22 from the product of Example 19 and a corresponding diacrylate. The dissipation factor of the test capacitor prepared from the product of Example 1 varied from a minimum of 0.3% at 30°C to a maximum of 1.45% at 150°C. The dissipation factor of the capacitor prepared from the diacrylate varied from a maximum of 2.7% at 30°C to a minimum of 0.15% at 130°C.

As will be apparent from the foregoing examples, capacitors containing the polymers of this invention as

dielectrics are characterized by versatility of application, frequently including extremely low dissipation factors at both high and low temperatures and low capacitance change over a wide range of temperatures.

In addition to the capacitor structures previously disclosed herein, the present invention is applicable to wound roll and other known types of capacitors. The dielectric coating in suitable cases may be a self-supporting film, instead of being adherently deposited on the electrode substrate.

## Claims

**1.** A capacitor comprising two electrodes separated by a dielectric member, said dielectric member comprising a polymer of at least one polyfunctional acrylate having the formula

(I) 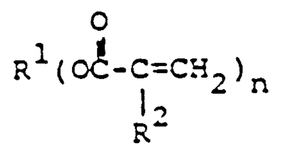 ,

wherein:

$R^1$ is a hydrocarbon or substituted hydrocarbon radical containing at least 4 carbon atoms;
$R^2$ is hydrogen or an alkyl radical containing 1-5 carbon atoms; and
n is from 2 to 6.

**2.** A capacitor according to Claim 1 wherein $R^2$ is hydrogen or methyl and n is 2 or 3.

**3.** A capacitor according to Claims 1-2 wherein the polyfunctional acrylate is derived from an aliphatic polyhydroxy compound containing about 4-20 carbon atoms, a polymer having groups capable of reacting with acrylic acid or derivatives thereof and having a number average molecular weight within the range of about 1000-5000, or an aromatic diepoxide or polyepoxide.

**4.** A capacitor according to Claims 1-3 wherein the polyfunctional acrylate is selected from the group consisting of trimethylolpropane triacylate, neopentyl glycol diacrylate, bisphenol A diacrylate, diacrylates of diepoxides derived from bisphenol A and ethoxylated derivatives thereof, diacrylates of .w-alkanediols containing an average of 12-20 carbon atoms and diacrylates of butadiene resins having a number average molecular weight of about 3000.

**5.** A capacitor according to Claims 1-4 wherein the polymer is prepared from a blend of polyfunctional acrylates.

**6.** A capacitor according to Claims 1-4 wherein the polymer is a copolymer prepared from a mixture of at least one compound of formula I with at least one monoacrylate of the formula

(II) 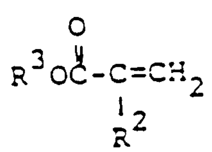 ,

wherein $R^3$ is a hydrocarbon or substituted hydrocarbon radical containing about 4-25 carbon atoms.

**7.** A capacitor according to Claim 6 wherein the monoacrylate is cyclohexyl methacrylate.

**8.** A capacitor according to Claim 1 wherein said dielectric member comprises a polymer of at least one polyfunctional acrylate having formula I wherein:

$R^1$ is an aliphatic, alicyclic or mixed aliphatic-alicyclic radical having about 10-40 carbon atoms which optionally contains up to three non-conjugated olefinic likages;

$R^2$ is hydrogen or methyl; or a mixture thereof with at least one ester having the formula

(XIV) 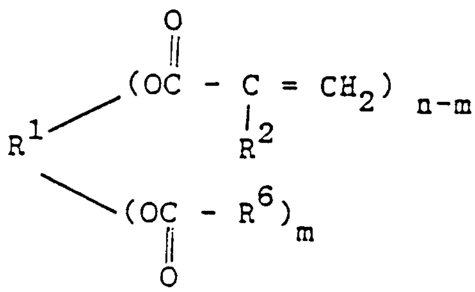

wherein $R^1$ and $R^2$ are as defined and:

$R^6$ is an aliphatic hydrocarbon radical containing 2-20 carbon atoms and free from acetylenic and polymerizable ethylenic unsaturation;

n is from 2 to 4; and

m is less than n and is from 1 to 3;

at least about 50% of the carboxylate moieties in said compositions having the formula

(XV) 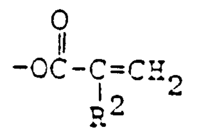 .

**9.** A capacitor according to Claims 1-8 wherein the electrodes are aluminum.

**10.** A capacitor according to Claim 9 wherein the dielectric member is a polymer in which all of the units are derived from said polyfunctional acrylate of formula I.

**11.** A capacitor according to Claim 9 wherein the dielectric member is a copolymer of said polyfunctional acrylate with at least one of acrylates of higher monohydroxy alcohols, higher monoepoxides, polyols and polyepoxides.

**12.** A capacitor according to Claims 8-11 wherein $R^1$ has at least 18 carbon atoms in a single chain.

**13.** A capacitor according to Claims 12 wherein $R^1$ is branched chain radical.

**14.** A capacitor according to Claim 13 wherein the polyfunctional acrylate has one of the formulas

(III) 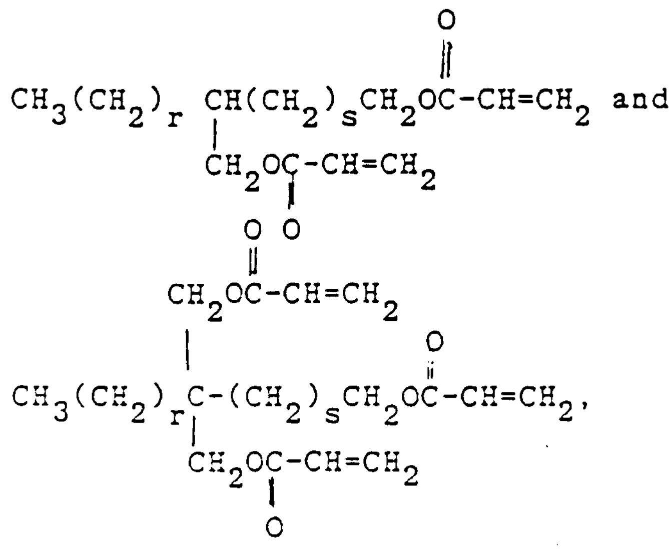 and

(IV)

wherein r and s are each 7 or 8 and the sum of r and s is 15.

**15.** A capacitor according to Claim 14 wherein the polyfunctional acrylate has formula IV.

**16.** A capacitor according to Claim 8 wherein $R^1$ is at least one aliphatic or alicyclic radical containing about 20-40 carbon atoms and optionally up to three non-conjugated olefinic linkages, at least about 40% of said $R^1$ radicals containing alicyclic moieties.

**17.** A capacitor according to Claim 8 wherein $R^1$ is derived from at least one polyhydroxy compound prepared by reduction of at least one corresponding polycarboxylic acid or ester thereof.

**18.** A capacitor according to Claim 17 wherein the polycarboxylic acid is linoleic acid dimer.

**19.** A capacitor according to Claim 18 wherein the polyhydroxy compound has the formula

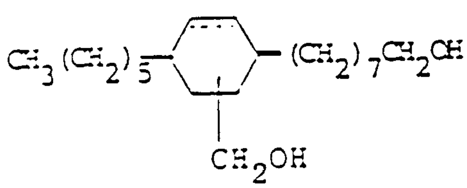

wherein the broken like indicates a single or double bond.

**20.** A capacitor according to Claims 1 and 8 wherein $R^1$ has the formula

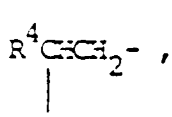

wherein $R^4$ is an alkyl radical having about 8-28 carbon atoms.

**21.** A capacitor according to Claims 1-20 wherein $R^2$ is hydrogen.

**22.** A capacitor according to Claim 21 wherein $R^4$ has the formula $R^5CH_2$, wherein $R^5$ is an alkyl radical.

**23.** A capacitor according to Claim 22 wherein $R^5$ is a straight chain alkyl radical having 9-17 carbon atoms.

**24.** A capacitor according to Claim 23 wherein $R^4$ is n-tetradecyl.

**25.** A capacitor according to Claims 1 and 8 wherein the dielectric member is a polymer in which all of the units are derived from a mixture of esters of formulas I and XIV.

**26.** A capacitor according to Claim 25 wherein about 70-90% of the carboxylate moieties have formula XV.

**27.** A method of making a capacitor according to Claims 1-26 which comprises forming on a substrate a dielectric coating of a polymer of at least one polyfunctional acrylate as described in said claims and depositing an electrode layer on said dielectric coating.

**28.** A method according to Claim 27, wherein the dielectric coating is formed by applying the polyfunctional monomer film and subsequently polymerizing said film.

**29.** A method according to Claim 28, wherein said monomer film is polymerized by an electron beam.

**30.** A method for making a capacitor according to Claim 25 which comprises forming on a substrate a dielectric coating of a polymer of the mixture of esters as described in said claim, and depositing an electrode layer on said dielectric, the preparation of the ester mixture defined in Claim 25 comprising reacting sequentially, in either order,

a polyhydroxy compound having the formula $R^1(OH)_n$, wherein $R^1$ is an aliphatic, alicyclic or mixed aliphatic-alicyclic radical having about 10-40 carbon atoms which Optionally contains up to about three non-conjugated olefinic linkages and n is from 2 to 4, with

a first carboxylic acid having the formula

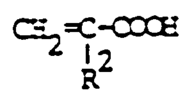

wherein $R^2$ is hydrogen or methyl, or a functional derivative thereof, and

a second carboxylic acid having the formula R6COOH, or a functional derivative thereof, wherein $R^6$ is an aliphatic hydrocarbon radical containing about 2-20 carbon atoms and free from acetylenic and polymerizable ethylenic unsaturation;

the mole ratio of said first acid to said second acid being at least 1:1.

**31.** A method according to Claim 30 wherein $R^2$ is hydrogen and $R^6$ is ethyl.

**32.** A method according to Claim 31 wherein $R^1$ is a branched chain radical having at least 18 carbon atoms in a single chain.

**33.** A method according to Claim 32 wherein $R^1$ has the formula

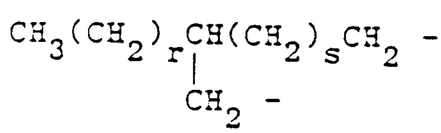

wherein r and s are each 7 or 8 and the sum of r and s is 15.

**34.** A method according to Claim 33 wherein the polyhydroxy compound is reacted first with said first acid and subsequently with said second acid.

**35.** A method according to Claim 34 wherein the mole ratio of said first acid to said second acid is about

1.7-1.9:1.

**Revendications**

1. Condensateur comprenant deux électrodes séparées par un élément diélectrique, cet élément diélectrique comprenant un polymère d'au moins un acrylate polyfonctionnel ayant la formule :

(I) 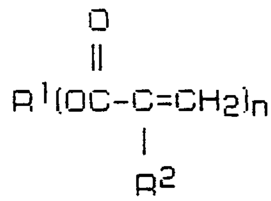

dans laquelle :

$R^1$ est un radical hydrocarboné ou hydrocarboné substitué contenant au moins 4 atomes de carbone;

$R^2$ est un atome d'hydrogène ou un radical alkyle contenant 1 à 5 atomes de carbone; et

n est de 2 à 6.

2. Condensateur suivant la revendication 1, dans lequel $R^2$ est un atome d'hydrogène ou un groupe méthyle et n est 2 ou 3.

3. Condensateur suivant les revendications 1-2, dans lequel l'acrylate polyfonctionnel dérive d'un composé polyhydroxy aliphatique contenant environ 4-20 atomes de carbone, d'un polymère ayant des groupes capables de réagir avec l'acide acrylique ou ses dérivés et ayant un poids moléculaire moyen en nombre de l'ordre d'environ 1000-5000, ou d'un diépoxyde ou d'un polyépoxyde aromatique.

4. Condensateur suivant les revendications 1-3, dans lequel l'acrylate polyfonctionnel est choisi dans le groupe consistant en triacrylate de triméthylolpropane diacrylate de néopentylglycol, diacrylate de bisphénol A, diacrylates de diépoxydes dérivés de bisphénol A et leurs dérivés éthoxylés, diacrylates d'$\alpha,\omega$-alcanediols contenant une moyenne de 12-20 atomes de carbone et diacrylates de résines butadiène ayant un nombre moléculaire moyen en nombre d'environ 3000.

5. Condensateur suivant les revendications 1-4, dans lequel le polymère est préparé à partir d'un mélange d'acrylates polyfonctionnels.

6. Condensateur suivant les revendications 1-4, dans lequel le polymère est un copolymère préparé à partir d'un mélange d'au moins un composé de formule (1) avec au moins un monoacrylate de formule :

(II) 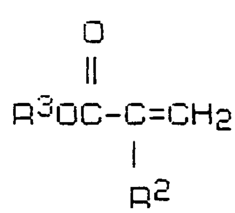

dans laquelle $R^3$ est un radical hydrocarboné ou hydrocarboné substitué contenant environ 4-25 atomes de carbone.

7. Condensateur suivant la revendication 6, dans lequel monoacrylate est le méthacrylate de cyclohexyle.

8. Condensateur suivant la revendication 1, dans lequel cet élément diélectrique comprend un polymère d'au moins un acrylate polyfonctionnel ayant la formule (1) dans laquelle :

$R^1$ est un radical aliphatique, alicyclique ou aliphatique-alicyclique mixte contenant environ 10-40

atomes de carbone qui contient éventuellement jusqu'à trois liaisons oléfiniques non-conjuguées;

$R^2$ est un atome d'hydrogène ou un radical méthyle; ou d'un mélange de celui-ci avec au moins un ester ayant la formule

(XIV)

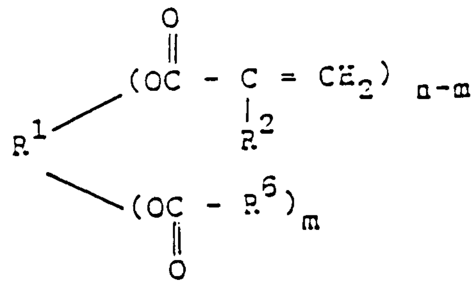

dans laquelle $R^1$ et $R^2$ sont tels que définis plus haut; et

$R^6$ est un radical hydrocarboné aliphatique contenant 2-20 atomes de carbone et dépourvu d'insaturation acétylénique et éthylénique polymérisable;

n est de 2 à 4; et

m est inférieur à n et est de 1 à 3;

au moins environ 50% des parties carboxylates dans ces compositions ayant la formule :

(XV)

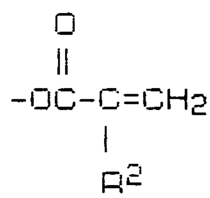

**9.** Condensateur suivant les revendications 1-8, dans lequel les électrodes sont en aluminium.

**10.** Condensateur suivant la revendication 9, dans lequel l'élément diélectrique est un polymère dans lequel toutes les unités dérivent de cet acrylate polyfonctionnel de formule (1).

**11.** Condensateur suivant la revendication 9, dans lequel l'élément diélectrique est un copolymère de cet acrylate polyfonctionnel avec au moins l'un des acrylates d'alcools monohydroxy supérieurs, de polyols, de polyèpoxydes et de monoépoxydes supérieurs.

**12.** Condensateur suivant les revendications 8-11, dans lequel $R^1$ a au moins 18 atomes de carbone dans une chaîne unique.

**13.** Condensateur suivant la revendication 12, dans lequel $R^1$ est un radical à chaîne ramifiée.

**14.** Condensateur suivant la revendication 13, dans lequel l'acrylate polyfonctionnel a l'une des formules suivantes :

(III) 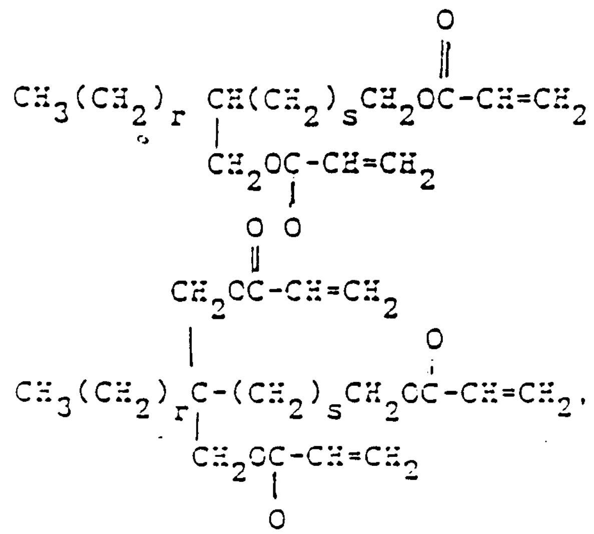 et

(IV)

dans lesquelles r et s sont chacun 7 ou 8 et la somme r + s = 15.

**15.** Condensateur suivant la revendication 14, dans lequel l'acrylate polyfonctionnel a la formule IV.

**16.** Condensateur suivant la revendication 8, dans lequel $R^1$ est au moins un radical aliphatique ou alicyclique contenant environ 20-40 atomes de carbone et éventuellement jusqu'à trois liaisons oléfiniques non-conjugées, au moins environ 40% de ces radicaux $R^1$ contenant des parties alicycliques.

**17.** Condensateur suivant la revendication 8, dans lequel $R^1$ dérive d'au moins un composé polyhydroxy préparé par réduction d'au moins un acide polycarboxylique correspondant ou d'un ester de celui-ci.

**18.** Condensateur suivant la revendication 17, dans lequel l'acide polycarboxylique est le dimère d'acide linoléique.

**19.** Condensateur suivant la revendication 18, dans lequel le composé polyhydroxy a la formule :

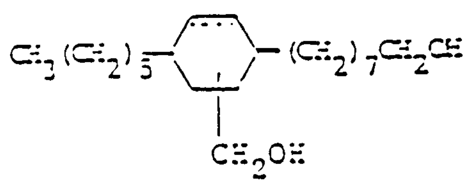

dans laquelle la ligne brisée indique une liaison simple ou double.

**20.** Condensateur suivant les revendications 1 et 8, dans lequel $R^1$ a la formule

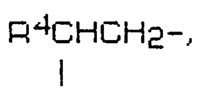

dans laquelle $R^4$ est un radical alkyle ayant environ 8-28 atomes de carbone.

**21.** Condensateur suivant les revendications 1-20, dans lequel $R^2$ est un atome d'hydrogène.

**22.** Condensateur suivant la revendication 21, dans lequel $R^4$ a la formule $R^5CH_2$, dans laquelle $R_5$ est un radical alkyle.

**23.** Condensateur suivant la revendication 22, dans lequel $R^5$ est un radical alkyle à chaîne droite ayant 9-17 atomes de carbone.

**24.** Condensateur suivant la revendication 23, dans lequel $R^4$ est un groupe n-tétradécyle.

**25.** Condensateur suivant les revendications 1 et 8, dans lequel l'élément diélectrique est un polymère dans lequel toutes les unités dérivent d'un mélange d'esters de formules 1 et XIV.

**26.** Condensateur suivant la revendication 25, dans lequel environ 70-90% des parties carboxylates ont la formule XV.

**27.** Procédé de fabrication d'un condensateur suivant les revendications 1-26, qui comprend la formation sur un substrat d'un revêtement diélectrique d'un polymère d'au moins un acrylate polyfonctionnel tel que décrit dans ces revendications et le dépôt d'une couche d'électrode sur ce revêtement diélectrique.

**28.** Procédé suivant la revendication 27, dans lequel le revêtement diélectrique est formé par application du film de monomère polyfonctionnel et polymérisation ultérieure de ce film.

**29.** Procédé suivant la revendication 28, dans lequel ce film de monomère est polymérisé par un faisceau électronique.

**30.** Procédé de fabrication d'un condensateur suivant la revendication 25, qui comprend la formation sur un substrat d'un revêtement diélectrique d'un polymère du mélange d'esters tel que décrit dans cette revendication, et le dépôt d'une couche d'électrode sur ce revêtement diélectrique, la préparation du mélange d'esters défini dans la revendication 25 comprenant la réaction successive, dans un ordre quelconque,

d'un composé polyhydroxy ayant la formule $R^1(OH)_n$, dans laquelle $R^1$ est un radical aliphatique, alicyclique ou aliphatique-alicyclique mixte ayant environ 10-40 atomes de carbone qui contient éventuellement jusqu'à environ trois liaisons oléfiniques non conjugées et n est de 2 à 4, avec

un premier acide carboxylique ayant la formule :

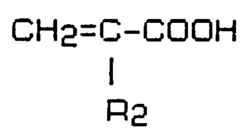

dans laquelle $R^2$ est un atome d'hydrogène ou un groupe méthyle, ou un dérivé fonctionnel de celui-ci, et

un second acide carboxylique ayant la formule $R^6COOH$ ou un dérivé fonctionnel de celui-ci, dans laquelle $R^6$ est un radical hydrocarboné aliphatique contenant environ 2-20 atomes de carbone et dépourvu d'insaturation acétylénique ou éthylénique polymérisable;

le rapport molaire de ce premier acide au second acide étant d'au moins 1/1.

**31.** Procédé suivant la revendication 30, dans lequel $R^2$ est un atome d'hydrogène et $R^6$ est un groupe éthyle.

**32.** Procédé suivant la revendication 31, dans lequel $R^1$ est un radical à chaîne ramifiée ayant au moins 18 atomes de carbone dans une chaîne unique.

**33.** Procédé suivant la revendication 32, dans lequel $R^1$ a la formule :

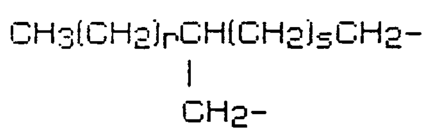

dans laquelle r et s sont chacun 7 ou 8 et la somme r + s = 15.

**34.** Procédé suivant la revendication 33, dans lequel le composé polyhydroxy est d'abord traité avec ce premier acide et ensuite avec ce second acide.

**35.** Procédé suivant la revendication 34, dans lequel le rapport molaire de ce premier acide à ce second acide est d'environ 1,7 à 1,9/1.

**Patentansprüche**

**1.** Kondensator mit zwei Elektroden, die durch ein dielektrisches Element getrennt sind, wobei das dielektrische Element ein Polymer mit mindestens einem mehrfunktionellen Akrylat aufweist und das die Formel

(I) 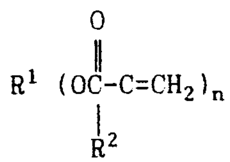

hat, wobei:
$R^1$ ein Kohlenwasserstoff- oder substituiertes Kohlenwasserstoff-Radikal ist, das mindestens 4 Kohlenstoffatome aufweist,
$R^2$ ein Wasserstoffatom oder ein Alkylradikal mit 1 bis 5 Kohlenstoffatomen ist, und
n zwischen 2 und 6 liegt.

**2.** Kondensator nach Anspruch 1, bei dem $R^2$ ein Wasserstoffatom oder eine Methylgruppe ist und der Wert von n 2 oder 3 beträgt.

**3.** Kondensator nach einem der Ansprüche 1 bis 2, wobei das mehrfunktionelle Akrylat aus einer aliphatischen Polyhydroxy-Verbindung, die ungefähr 4 bis 20 Kohlenstoffatome aufweist, einem Polymer, das über Gruppen verfügt, die fähig sind, mit Akrylsäure oder deren Derivaten zu reagieren und ein mittleres Zahlenmolekulargewicht im Bereich von ungefähr 1000 bis 5000 aufweist, oder einem aromatischen Diepoxid oder Polyepoxid abgeleitet ist.

**4.** Kondensator nach einem der Ansprüche 1 bis 3, bei dem das mehrfunktionelle Akrylat aus der Gruppe aus Trimethylolpropan-Triakrylat, Neopentyl-Glykol-Diakrylat, Bisphenol-A-Diakrylat, Diakrylaten von Diepoxiden, die vom Bisphenol-A und äthoxylierten Derivaten abgeleitet sind, Diakrylaten von $\alpha$,w-Alkanediolen, die eine mittlere Anzahl von 12 bis 20 Kohlenstoffatomen aufweisen, und Diakrylaten von Butadien-Harzen, die ein mittleres Zahlenmolekulargewicht von ungefähr 3000 aufweisen.

**5.** Kondensator nach einem der Ansprüche 1 bis 4, bei dem das Polymer aus einem Gemisch aus mehrfunktionellen Akrylaten hergestellt wird.

**6.** Kondensator nach einem der Ansprüche 1 bis 4, bei dem das Polymer ein Kopolymer ist, das aus einem Gemisch aus mindestens einer Verbindung nach Formel I und mit mindestens einem Monoakrylat der Formel:

(II) 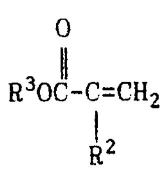

hergestellt wird, wobei $R^3$ ein Kohlenwasserstoff- oder substituiertes Kohlenwasserstoff-Radikal mit ungefähr 4 bis 25 Kohlenstoffatomen ist.

7. Kondensator nach Anspruch 6, bei dem das Monoakrylat Zyklohexyl-Methylakrylat ist.

8. Kondensator nach Anspruch 1, bei dem das besagte dielektrische Element ein Polymer mit mindestens einem mehrfunktionellem Akrylat nach der Formel I ausgestattet ist, wobei:

$R^1$ ein aliphatisches, alizyklisches oder gemischtes aliphatisch-alizyklisches Radikal mit ungefähr 10 bis 40 Kohlenstoffatomen ist, und das optionell bis zu drei nicht-konjugierte olefinierte Verbindungen aufweisen kann,

$R^2$ ein Wasserstoffatom oder eine Methylgruppe oder ein Gemisch von diesen mit mindestens einem Ester ist, der die Formel hat:

(XIV)

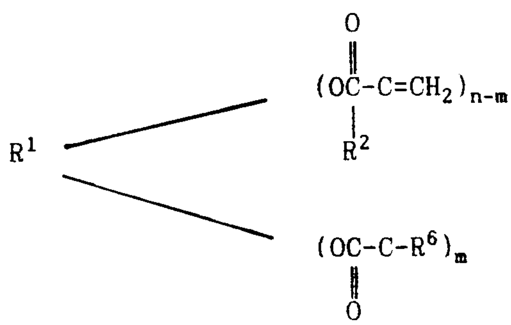

,

wobei $R^1$ und $R^2$ wie oben definiert sind, und

$R^6$ ein aliphatisches Kohlenwasserstoff-Radikal mit 2 bis 20 Kohlenstoffatomen und frei von acetylenischen und polymerisierbaren äthylenischen Ungesättigtheiten ist,

n eine Zahl zwischen 2 und 4 ist, und

m kleiner als n ist und zwischen 1 und 3 liegt,

und mindestens 50 Prozent der Karboxylatkomponenten in den genannten Verbindungen die Formel

(XV)

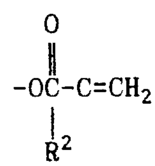

aufweisen.

9. Kondensator nach einem der Ansprüche 1 bis 8, bei dem die Elektroden aus Aluminium bestehen.

10. Kondensator nach Anspruch 9, bei dem das dielektrische Element ein Polymer ist, bei dem alle Einheiten von dem besagten mehrfunktionellen Akrylat der Formel I abgeleitet sind.

11. Kondensator nach Anspruch 9, bei dem das dielektrische Element ein Kopolymer des besagten mehrfunktionellen Akrylats mit mindestens einem der Akrylate von höheren Monohydroxy-Alkoholen, höheren Monoepoxiden, Polyolen und Polyepoxiden ist.

12. Kondensator nach einem der Ansprüche 8 bis 11, bei dem $R^1$ mindestens 18 Kohlenstoffatome in einer einzelnen Kette aufweist.

13. Kondensator nach Anspruch 12, bei dem $R^1$ ein verzweigtes Kettenradikal ist.

14. Kondensator nach Anspruch 13, bei dem das mehrfunktionelle Akrylat eine der folgenden Formeln aufweist:

(III) 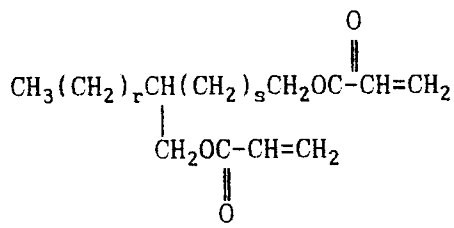 und

(IV) 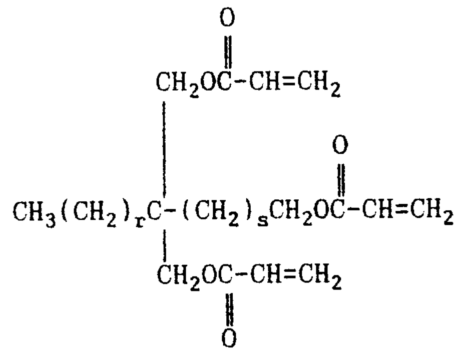 ,

wobei r und s jeweils 7 oder 8 sind und die Summe von r und s 15 beträgt.

**15.** Kondensator nach Anspruch 14, bei dem das mehrfunktionelle Akrylat die Formel IV hat.

**16.** Kondensator nach Anspruch 8, bei dem $R^1$ mindestens ein aliphatisches oder alizyklisches Radikal mit ungefähr 20 bis 40 Kohlenstoffatomen und optionell bis zu drei nicht-konjugierte olefinierte Verbindungen aufweisen kann, wobei mindestens ungefähr 40 Prozent der besagten $R^1$-Radikale alizyklische Komponenten aufweisen.

**17.** Kondensator nach Anspruch 8, bei dem $R^1$ von mindestens einer Polyhydroxy-Verbindung abgeleitet ist, die durch Reduktion von mindestens einer zugehörigen Polykarbonsäure oder dem zugehörigen Ester hergestellt ist.

**18.** Kondensator nach Anspruch 17, bei dem die Polykarbonsäure das Dimer der Linolsäure ist.

**19.** Kondensator nach Anspruch 18, bei dem die Polyhydroxy-Verbindung der Formel

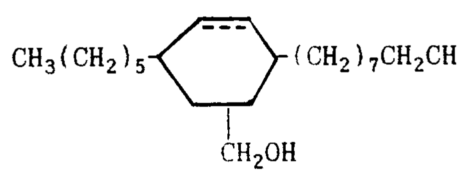

entspricht, wobei die gestrichelte Linie eine einfache oder doppelte Bindung andeutet.

**20.** Kondensator nach Anspruch 1 und Anspruch 8, bei dem $R^1$ die Formel

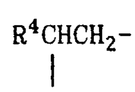

aufweist, wobei $R^4$ ein Alkyl-Radikal ist, das zwischen ungefähr 8 und 28 Kohlenstoffatome aufweist.

**21.** Kondensator nach einem der Ansprüche 1 bis 20, bei dem $R^2$ ein Wasserstoffatom ist.

**22.** Kondensator nach Anspruch 21, bei dem $R^4$ die Formel $R^5CH_2$ aufweist, wobei $R^5$ ein Alkyl-Radikal ist.

**23.** Kondensator nach Anspruch 22, bei dem $R^5$ eine gerade Kette von Alkylradikalen ist, die 9 bis 17 Kohlenstoffatome aufweist.

**24.** Kondensator nach Anspruch 23, bei dem $R^4$ eine n-Tetradezylgruppe ist.

**25.** Kondensator nach Anspruch 1 und Anspruch 8, bei dem das dielektrische Element ein Polymer ist, bei dem alle Einheiten Derivate aus einem Gemisch aus Estern der Formeln I und XIV sind.

**26.** Kondensator nach Anspruch 25, bei dem ungefähr 70 bis 90 Prozent der Karboxylatanteile die Formel XV haben.

**27.** Verfahren zur Herstellung eines Kondensators nach einem der Ansprüche 1 bis 26, welches die Verfahrensschritte umfaßt des Ausbildens einer dielektrischen Beschichtung von einem Polymer von mindestens einem mehrfunktionellen Akrylat gemäß einem der besagten Ansprüche auf einem Substrat und des Ablagerns einer Elektrodenschicht auf der dielektrischen Beschichtung.

**28.** Verfahren nach Anspruch 27, bei dem die dielektrische Beschichtung in dem Auftragen des mehrfunktionellen Monomerfilms und des nachfolgenden Polymerisierens des Films besteht.

**29.** Verfahren nach Anspruch 28, bei dem der besagte Monomerfilm durch einen Elektronenstrahl polymerisiert wird.

**30.** Verfahren zur Herstellung eines Kondensators gemäß Anspruch 25, bei dem auf einem Substrat eine dielektrische Beschichtung eines Polymers aus einem Gemisch von Estern gemäß dem besagten Anspruch besteht, und daß eine Elektrodenschicht auf dem Dielektrikum abgelagert wird, wobei die Vorbereitung der Estermischung gemäß Anspruch 25 die nachgenannten aufeinanderfolgenden Reaktionen in einer beliebigen Reihenfolge umfaßt,

einer Polyhydroxy-Verbindung mit der Formel $R^1(OH)_n$, wobei $R^1$ ein aliphatisches, alizyklisches oder gemischtes aliphatischesalizyklisches Radikal ist, das ungefähr 10 bis 40 Kohlenstoffatome aufweist und das optionell bis zu drei nicht-konjugierte olefinierte Verbindungen aufweisen kann, wobei n zwischen 2 und 4 liegt, mit

einer ersten Karbonsäure, die die Formel

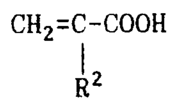

aufweist, wobei $R^2$ ein Wasserstoffatom oder eine Methylgruppe oder ein funktionales Derivat von diesen ist, und

einer zweiten Karbonsäure, die die Formel $R^6COOH$ aufweist oder ein funktionales Derivat von dieser ist, wobei $R^6$ ein aliphatisches Kohlenwasserstoff-Radikal ist, das ungefähr 2 bis 20 Kohlenstoffatome aufweist und frei von Acetylen- und polymerisierbaren Ätyhlen-Ungesättigtheiten ist,

wobei das Mol-Verhältnis der besagten ersten zu der besagten zweiten Säure mindestens 1:1 beträgt.

**31.** Verfahren nach Anspruch 30, bei dem $R^2$ ein Wasserstoffatom und $R^6$ eine Äthylgruppe ist.

**32.** Verfahren nach Anspruch 31, bei dem $R^1$ ein sich verzweigendes Kettenradikal mit wenigstens 18 Kohlenstoffatomen in einer einzigen Kette ist.

**33.** Verfahren nach Anspruch 32, bei dem $R^1$ die Formel

$$\begin{array}{l} CH_3(CH_2)_rCH(CH_2)_sCH_2- \\ \phantom{CH_3(CH_2)_r}| \\ \phantom{CH_3(CH_2)_r}CH_2- \end{array}$$

aufweist, wobei r und s jeweils 7 oder 8 sind und die Summe aus r und s 15 beträgt.

**34.** Verfahren nach Anspruch 33, bei dem die Polyhydroxyverbindung zuerst mit der besagten ersten Säure und danach mit der besagten zweiten Säure reagiert.

**35.** Verfahren nach Anspruch 34, bei dem das Molverhältnis der ersten Säure zu der zweiten Säure ungefähr 1,7-1,9:1 beträgt.

Fig.1.

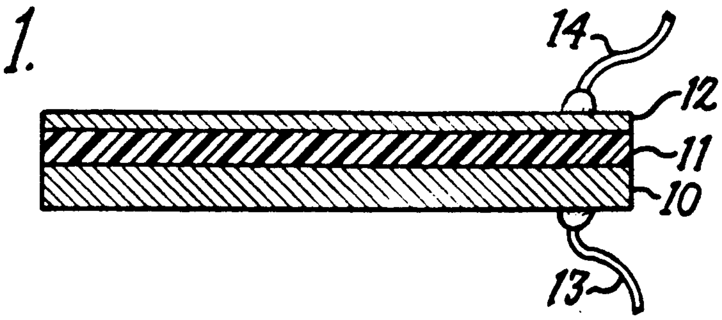


Fig.2.

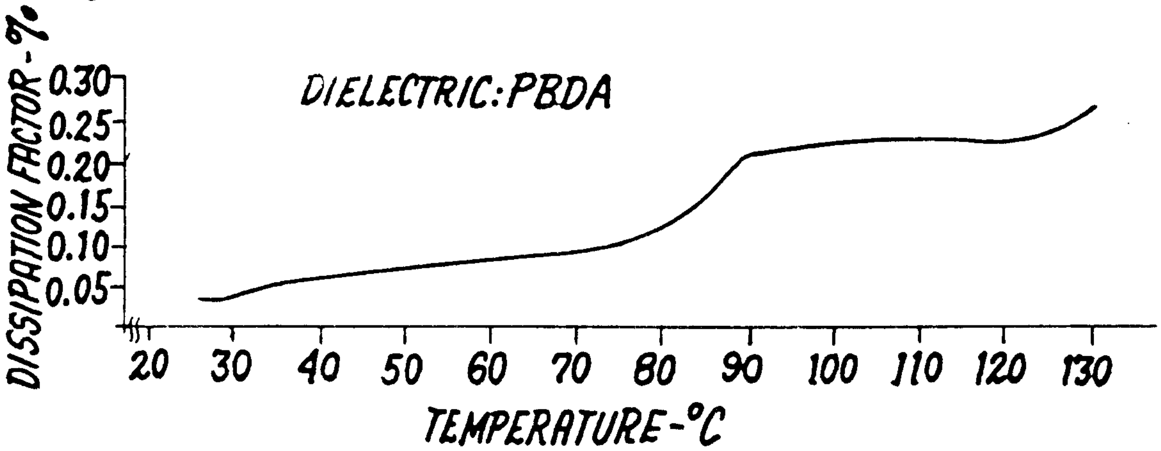


Fig.3.

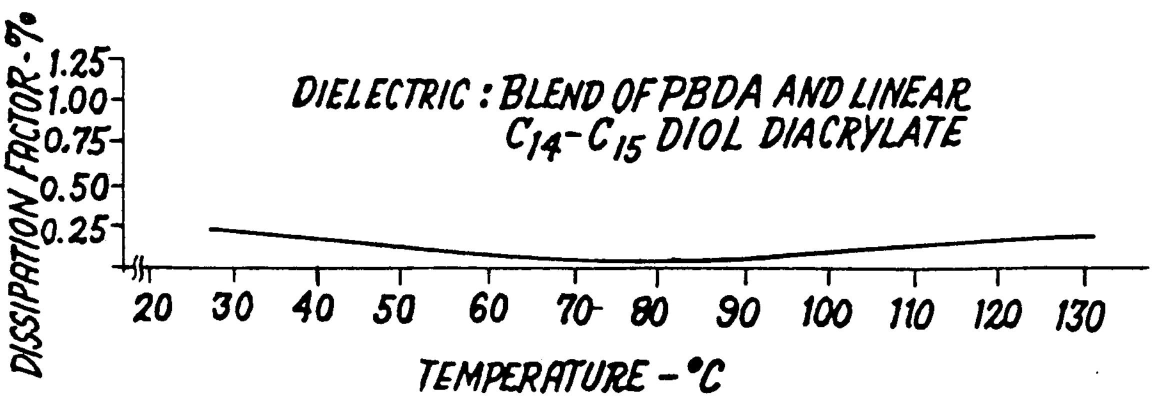

Fig. 4.

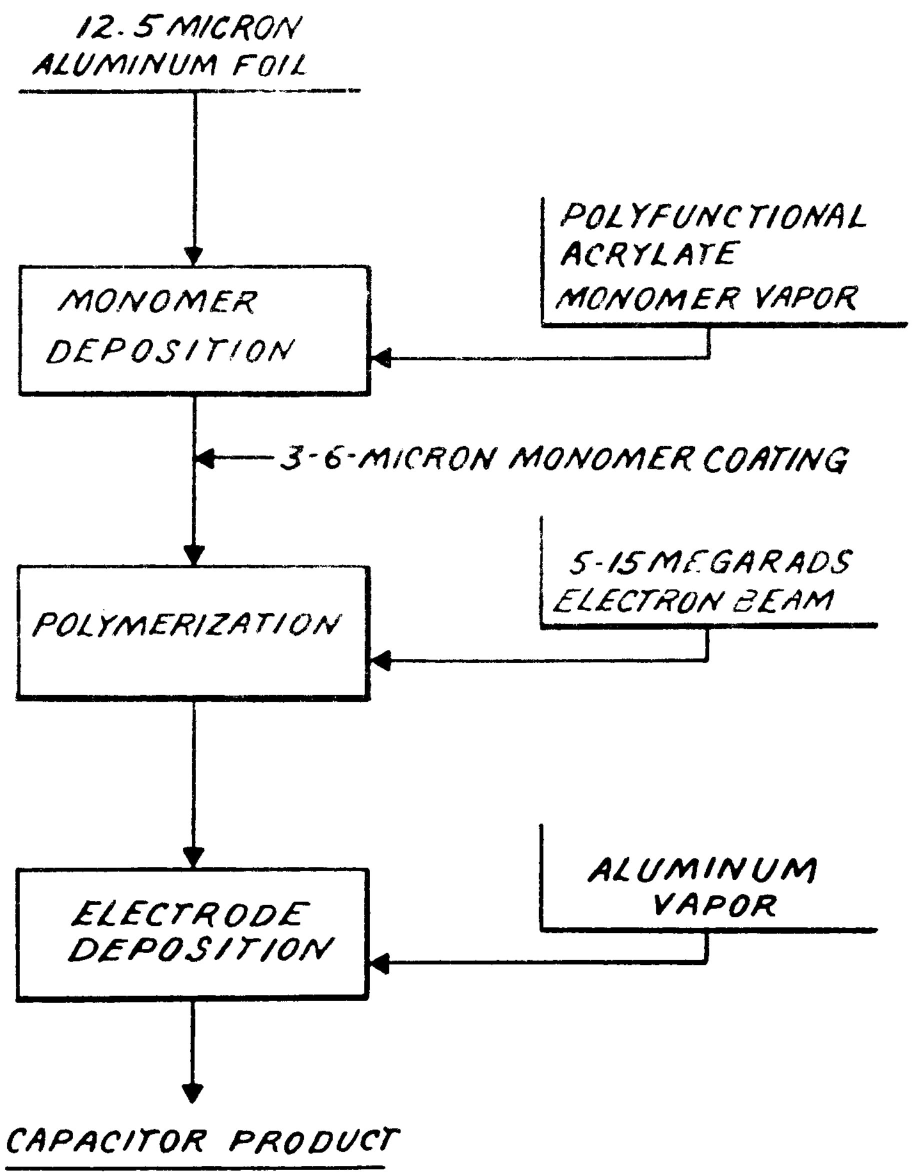
12.5 MICRON
ALUMINUM FOIL
MONOMER
DEPOSITION
POLYFUNCTIONAL
ACRYLATE
MONOMER VAPOR
3-6-MICRON MONOMER COATING
POLYMERIZATION
5-15 MEGARADS
ELECTRON BEAM
ELECTRODE
DEPOSITION
ALUMINUM
VAPOR
CAPACITOR PRODUCT